## Europäisches Patentamt

(19) **European Patent Office**

**Office européen des brevets**

(11) Veröffentlichungsnummer: **0 086 488**
**B1**

(12) **EUROPÄISCHE PATENTSCHRIFT**

(45) Veröffentlichungstag der Patentschrift:
**22.03.89**

(21) Anmeldenummer: **83101416.2**

(22) Anmeldetag: **14.02.83**

(51) Int. Cl.⁴: **F 27 B 7/32, C 10 B 1/10**

(54) Austragsvorrichtung für einen Drehrohrofen.

(30) Priorität: **16.02.82 DE 3205366**

(43) Veröffentlichungstag der Anmeldung:
**24.08.83 Patentblatt 83/34**

(45) Bekanntmachung des Hinweises auf die Patenterteilung:
**22.03.89 Patentblatt 89/12**

(84) Benannte Vertragsstaaten:
**AT BE CH FR GB IT LI NL**

(56) Entgegenhaltungen:
**DE-A- 1 551 841**
**DE-A- 2 011 728**
**DE-A- 2 033 535**
**DE-A- 3 018 572**
**DE-C- 805 956**
**FR-A- 1 404 728**
**FR-A- 2 098 378**
**GB-A- 230 632**
**US-A- 1 389 231**
**US-A- 3 848 744**

(73) Patentinhaber: **Deutsche Kommunal-Anlagen Miete GmbH, c/o Deutsche Anlagen-Leasing GmbH Wilhelm-Theodor-Römheld-Strasse 30, D-6500 Mainz (DE)**

(72) Erfinder: **Hillekamp, Klaus, Dr., Musäusstrasse 3, D-8000 München (DE)**

(74) Vertreter: **Tetzner, Volkmar, Dr.-Ing. Dr. jur., Van-Gogh-Strasse 3, D-8000 München 71 (DE)**

## Beschreibung

Die Erfindung betrifft eine Austragsvorrichtung entsprechend dem Oberbegriff des Anspruches 1.

Eine Austragsvorrichtung gemäß dem Oberbegriff des Anspruches 1 ist durch die DE-A-2 033 535 bekannt. Das am Austrittsende des Drehrohres angebrachte, mit dem Drehrohr rotierende Sieb ist hierbei als kegelstumpfförmiges Maschensieb ausgebildet.

Zum Stand der Technik gehören weiterhin stationär angeordnete Stangensiebe mit einseitig eingespannten Stäben, die zwischen sich Siebspalte frei lassen (US-A-3 848 744 und DE-C-805 956).

Nun entsteht bei der Pyrolyse von Müll ein fester Rückstand, der zum einen aus energiereichem Schwelkoks besteht, der als fester und transportabler Brennstoff weiterverwendbar ist, zum anderen aus groben Feststoffen, wie Dosen, Metallteilen, Steinen usw. sowie aus feinen Inertpartikeln, wie Glas und Sand. Verwendet man nun in der Austragsvorrichtung des Drehrohrofens ein Maschensieb, so besteht die Gefahr, daß sich grobe Feststoffe, insbesondere Drähte, wie sie beispielsweise in Altreifen enthalten sind, in den Sieblöchern einhängen und dadurch zu Betriebsstörungen führen.

Der Erfindung liegt daher die Aufgabe zugrunde, eine Austragsvorrichtung entsprechend dem Oberbegriff des Anspruches 1 so auszubilden, daß bei der Pyrolyse von Müll eine Trennung der groben Feststoffe von dem Schwelkoks möglich ist, ohne daß dabei ein kontinuierlicher und störungsfreier Betrieb der Anlage gefährdet ist.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Durch eine entsprechende Wahl des Abstandes zwischen den Stäben des Stangensiebes wird gewährleistet, daß der entstehende Schwelkoks zwischen den Stäben durchfällt und die groben Feststoffe, wie Dosen, Metallteile und Steine, von dem Stangensieb zurückgehalten und vom Schwelkoks abgetrennt werden. Da die groben Feststoffe in der Regel einen höheren Wärmewert haben als der koksartige Rückstand, muß zu dessen Kühlung weniger Wärme abgeführt werden, als wenn er noch mit den groben Feststoffen verbunden ist. Desweiteren wird der koksartige Rückstand aufgrund seiner Abtrennung vor der nachgeschalteten Kühlung nicht durch den gemeinsamen Austrag mit den groben Feststoffen weiter zerkleinert, so daß er anschließend leichter von den in ihm noch befindlichen feinen Inertpartikeln getrennt werden kann.

Da in dem Schwelkoks die groben Feststoffe nicht mehr enthalten sind, läßt er sich trocken beispielsweise über einen Schneckenaustrag herausführen. Der koksartige Rückstand kann hierdurch leichter aufbereitet werden, wobei er bei einem Einsatz als fester Brennstoff einen höheren Heizwert aufweist. Die groben Feststoffe können dagegen in einfacher Weise durch einen Naßentschlacker ausgetragen werden, in dem sie bereits gewaschen werden.

Als besonders zweckmäßig hat es sich erwiesen, die Stäbe jeweils an ihren den freien Enden abgekehrten Enden zu haltern, möglichst derart, daß ihre Längsachsen in Ebenen verlaufen, welche parallel zur Längsachse des Drehrohres sind.

Als besonders günstig hat es sich erwiesen, wenn die Längsachsen der Stäbe parallel zueinander verlaufen, und äquidistant zueinander angeordnet sind, da dann über die gesamte Länge des Stangensiebes die gleiche «Maschenweite» besteht. Wenn die Längsachsen der Stäbe mit der Längsachse des Drehrohres fluchten, ist das Stangensieb besonders einfach auf dem Drehrohr befestigbar.

Gemäß einer alternativen Ausgestaltung können die Stäbe so angeordnet sein, daß sich die zwischen ihnen gebildeten durchgehenden Schlitze mit zunehmendem Abstand von der Austrittsebene des Drehrohres leicht aufweiten, damit grobe Feststoffe, falls sich diese zwischen zwei benachbarten Stäben verklemmt haben sollten, durch das weiter nachfolgende Material sicher bis zum freien Ende der Stäbe hinausgedrängt werden. Diese Aufweitung darf jedoch nur so weit gehen, daß die ursprüngliche Schlitzweite über die Länge des Stangensiebs nur unwesentlich ändert.

Besonders günstig ist es, wenn die Oberkante des von dem Drehrohrofen an dessen Ausgangsende mit festen Rückständen beschickten Bereichs des Stangenrostes mit der angrenzenden Innenfläche des Drehrohres fluchtet, da hiermit eine Stufenbildung verhindert ist, welche die Gefahr eines Hängenbleibens bzw. Verklemmens von groben Feststoffen vergrößern würde.

Als besonders praktisch hat es sich erwiesen, wenn die Stäbe eine Querschnittsgestalt aufweisen, und/oder derart angeordnet sind, daß sich die zwischen zwei benachbarten Stäben gebildeten Schlitze von der Beschickungsseite des Stangenrosts, d.h. der Seite auf welche die aus dem Drehrohr austretenden Feststoffe auf ihn gelangen, zu dessen Abgabeseite aufweiten. Die Stäbe sind hierzu zweckmäßigerweise mit keilförmigen Querschnitten ausgebildet. Eine bezüglich der Funktion und der Stabilität besonders günstige Ausgestaltung der Stäbe sieht vor, daß sie im Querschnitt ruderblatt- bzw. paddelartig ausgebildet sind, wobei die Kanten der Stäbe auf der Beschickungsseite abgeschrägt sind und die der Abgabeseite zugekehrten Endbereiche zueinander planparallele Seitenflächen aufweisen.

Die Stäbe berühren vorzugsweise einen konzentrisch zur Längsachse des Drehrohres verlaufenden Kreisbogen, wobei eine Anordnung besonders günstig ist, bei der die Stäbe zumindest in ihrem frei abstehenden Bereich einen Kreiszylinder oder einen Kreiskegel festlegen, dessen Symmetrieachse vorzugsweise mit der Drehachse des Drehrohres fluchtet, so daß ein an dieses anschließender Stangenkäfig entsteht. Mit Vorteil sind die Stäbe dabei derart orientiert, daß ihre Längssymmetrieebenen radial zu der Drehachse des Drehrohres oder der Symmetrieachse des Kreiszylinders bzw. Kreiskegels verläuft. Bei einer Verschiebung des Siebs quer zur Längsrichtung der Stangen bzw. bei einer Drehung desselben um seine Symmetrieachse ergibt sich hierdurch über den gesamten Umfang jeweils die gleiche Geometrie in den Schlitzen.

Damit auch grose Stücke unzerkleinert in dem Drehrohrofen pyrolytisch zersetzt werden können, empfiehlt es sich, die freien Enden der Stäbe von der ihnen gegenüberliegenden Wandung der Austragsvorrichtung einen Abstand einhalten zu lassen, der größer ist als die größte Dimension des Beschickungsbereiches für den Drehrohrofen.

Wenn die freien Enden der Stäbe eine Abwurfkante zu einer nach unter versetzt angeordneten Naßaustragseinrichtung für die groben Feststoffe bilden, fallen diese direkt in die Naßaustragseinrichtung, welche einen einfachen gasdichten Abschluß der Austragsvorrichtung herstellt, die groben Feststoffe wirksam abkühlt und zugleich reinigt.

Da Drähte, Stäbe oder andere längliche nicht durch die Pyrolyse zersetzbare Abfallstoffe bei ihrem Durchlauf durch das Drehrohr weitgehend parallel zu dessen Drehachse L-L ausgerichtet werden, kann es unter Umständen vorkommen, daß diese zwischen den Stäben des Stangensiebs hindurchfallen und in den Austrag für den Schwelkoks geraten. Zu Vermeidung dieser Probleme ist ein Stangenrost vorgesehen, dessen Stangen im wesentlichen senkrecht zu den Stäben des Stangensiebs verlaufen. Der Stangenrost ist vorzugsweise im wesentlichen eben ausgebildet und verläuft von dem unter dem Austrittsende des Drehrohres liegenden Bereich in Richtung auf die freien Enden der Stangen des Stangensiebes zweckmäßigerweise nach abwärts geneigt. Mit Vorteil ist der Stangenrost des weiteren mit einer Einrichtung versehen, welche ihn senkrecht zur Richtung seiner Stangen in eine hin- und hergehende Bewegung versetzt. Dies läßt sich beispielsweise einfach mittels einer Exzenterlagerung des Stangenrostes erreichen, durch welche die auf ihm gelagerten groben Feststoffe in Richtung auf die Naßaustragseinrichtung abgeworfen werden. Um sicher zu stellen, daß hierdurch nicht auch der Schwelkoks zu den groben Abfallstoffen gelangt, ist der Stangenabstand in dem Stangenrost größer gewählt als der Abstand der Stäbe in dem Stangensieb.

Unter dem Stangensieb bzw. dem Stangenrost ist zweckmäßigerweise eine Sammel- und Austragseinrichtung für den Schwelkoks angebracht, die vorzugsweise einen Trockenaustrag bildet, der im einzelnen beispielsweise in der DE-OS 3 005 205 der Anmelderin beschrieben ist.

Das Stangensieb kann getrennt von dem Drehrohr angebracht sein, es ist jedoch besonders günstig es drehfest mit diesem zu verbinden. Da jedes Schweißen von bereits getemperten Teilen zu neuen Spannungen führt und der Stangenrost wie der Drehrohrofen erheblichen Temperaturschwankungen ausgesetzt sind, versucht man möglichst ohne derartige Schweißstellen auszukommen. Gemäß einer besonders bevorzugten Ausgestaltung des Stangensiebs sind die Stäbe an ihren bezüglich des Querschnitts der Abgabeseite zugekehrten Bereichen zumindest mit je einer Durchgangsbohrung versehen, durch welche je eine Seele hindurchführbar ist, mittels derer das Stangensieb außen oder innen auf das Drehrohr aufspannbar ist. Die Stäbe werden auf den Seelen zweckmässigerweise mittels hülsenförmiger Abstandhalter in der gewünschten Lage gehaltert.

Bei einer Ausführungsform des Stangensiebs, welche sich besonders zum Einspreizen in das freie Ende des Drehrohres eignet, ist die Seele an einem Ende mit einem Vorsprung versehen, der nicht durch die Bohrungen in den Stäben hindurchgeht, wobei an dem anderen Ende der Seele ein Gewinde angebracht ist, auf welches ein Schraubglied aufschraubbar ist, das sich mit seinem freien Ende an dem Vorsprung abstützt. Durch Verdrehen des Schraubglieds läßt sich das von der Stirnseite in das Drehrohr mit seinem Ende eingeführte Stangensieb gegen die Innenwandung des Drehrohres festklemmen.

Gemäs einer für ein Aussen-Aufspannen auf das Drehrohr besonders geeigneten Ausführungsform ist die Seele an beiden Enden mit einem Gewinde versehen, das jeweils in das Innere eines die beiden Endstäbe starr zu einer Einheit zusammenfassenden Verbindungsstückes hineinreicht, wobei die Enden der Seele in diesem Verbindungsstück mittels Schraubverbindungen verspannt werden. Ein Stau in dem Stangensieb wird sicher vermieden, wenn dieses in Richtung auf die freien Enden der Stäbe mit einem Gefälle, das heißt mit einem Winkel $\alpha$ gegenüber der Horizontalen verläuft. Das Gefälle entspricht vorzugsweise der Neigung des Drehrohrofens gegenüber der Horizontalen.

Es ist günstig, wenn die Austragsvorrichtung als thermisch isolierte abgedichtete Kammer ausgebildet ist, in welche das freie Ende des Drehrohres hineinragt, dessen Antrieb jedoch außerhalb der Kammer angeordnet ist. Die Kammer enthält zweckmäßigerweise in ihrem unteren Bereich einen Trockenaustrag für den Schwelkoks und eine Naßaustragseinrichtung für die groben Feststoffe.

Die beiliegenden Zeichnungen dienen der weiteren Erläuterung der Erfindung.

Fig. 1 zeigt in teilgeschnittener Seitenansicht einen Drehrohrofen mit einem Ausführungsbeispiel der erfindungsgemässen Austragsvorrichtung.

Fig. 2 zeigt im vergrößerten Maßstab eine Detailansicht der in Fig. 1 dargestellten Austragsvorrichtung und erläutert die Befestigung eines Stangensiebes an dem Drehrohrofen.

Fig. 3 zeigt im vergrößerten Maßstab eine teilgeschnittene Seitenansicht von einer weiteren Ausführungsform des Stangensiebes und seiner Befestigung an dem freien Ende eines Drehrohrofens.

Fig. 4 zeigt eine Vorderansicht in Richtung der Pfeile IV–IV von Fig. 3 auf das dort gezeigte Stangensieb und die Stirnfläche des Drehrohrofens.

Fig. 5 zeigt im teilgeschnittenen Zustand und vergrößertem Maßstab eine Detailansicht des in Fig. 4 mit V bezeichneten Bereichs des Stangensiebes zur Erläuterung von dessen Befestigung im freien Ende des Drehrohrofens.

Fig. 6 zeigt eine perspektivische Ansicht von einem ersten Ausführungsbeispiel eines Stabes, mit Blickrichtung von dessen rückwärtigen Ende auf dessen freies Ende, welcher bei den Ausführungsformen der Fig. 1 bis 5 des Stangensiebes verwendbar ist.

Fig. 7 zeigt in perspektivischer Darstellung eine weitere Ausführungsform eines Stabes, von seinem rückwärtigen Ende in Richtung auf dessen freies Ende gesehen, der bei den Ausführungsformen des Stangensiebs gemäß den Fig. 1 bis 5 ebenfalls einsetzbar ist.

Fig. 8 zeigt in teilgeschnittener Seitenansicht ein weiteres Ausführungsbeispiel eines Stangensiebs und dessen Befestigung auf dem freien Ende eines Drehrohrofens.

Fig. 9 zeigt eine Vorderansicht auf das Stangensieb der Fig. 8 und die Stirnfläche des Drehrohrofens in Richtung der Pfeile IX–IX von Fig. 8.

Fig. 10 zeigt eine teilgebrochene Schnittansicht von der Befestigung des Stangensiebs der Fig. 8 und 9 auf dem Drehrohrofen im vergrößerten Maßstab in Richtung der Pfeile X–X von Fig. 8.

Fig. 11 zeigt in perspektivischer Darstellung ein erstes Ausführungsbeispiel eines Stabes, von dessen rückwärtigen Ende in Richtung auf dessen freies Ende gesehen, der für das Ausführungsbeispiel des Stangenrostes gemäß den Fig. 8 bis 10 geeignet ist.

Fig. 12 zeigt in perspektivischer Darstellung ein weiteres Beispiel eines Stabes, von dem rückwärtigen Ende in Richtung auf deren freies Ende gesehen, der für das in den Fig. 8 bis 10 beschriebene Ausführungsbeispiel des Stangenrostes geeignet ist.

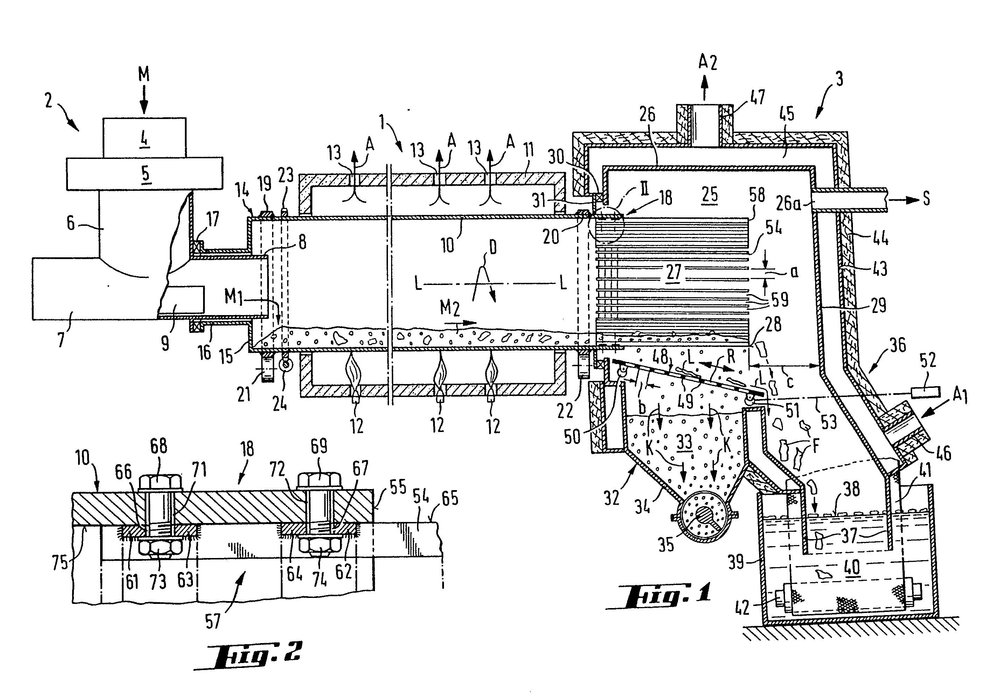

Fig. 1 zeigt schematisch einen Drehrohrofen 1, dem ein Beschickungsbereich 2 vorgeschaltet und eine Austragsvorrichtung 3 nachgeschaltet ist.

Der Beschickungsbereich 2 enthält einen Eingabetrichter 4, der um seine Längsachse drehbar in einem Lagerbereich 5 gehalten ist, der über eine Flüssigkeit in nicht dargestellter Weise eine gasdichte Abdichtung zu dem Eingabetrichter 4 herstellt. Der Eingabetrichter 4 ist des weiteren mit in der Zeichnung nicht näher dargestellten Klappen versehen, welche das Eindringen von Müll in Richtung des Pfeiles M ermöglichen. Der Lagerbereich 5 ist mit einem nach unten ragenden Einfüllstutzen 6 versehen, der von oben in ein Eingaberohr 7 mündet, welches mit seinem freien Ende 8 in das Innere des Drehrohrofens 1 konzentrisch zu dessen Längsachse L–L mündet. Mit dem Bezugszeichen 9 ist der vordere Bereich eines nicht näher dargestellten Schiebers bezeichnet, mittels dessen der über den Eingabetrichter 4 und den Einfüllstutzen 6 eingebrachte Müll M wie durch den Pfeil M1 angedeutet in das Innere des Drehrohrofens 1 eingebracht wird.

Der Drehrohrofen 1 besteht aus einem zentrisch zu der Achse L–L angeordneten Drehrohr 10, das über den größten Bereich seiner Längserstreckung durch eine Beheizungskammer 11 hindurchführt, wodurch das Innere des Drehrohres 10 indirekt beheizt wird. Die Beheizungskammer ist zu diesem Zweck auf ihrer Unterseite mit Brennern 12 versehen und auf ihrer Oberseite mit einer Reihe von Austrittsöffnungen 13, durch welche die Brennerabgase wie durch die Pfeile A angedeutet aus der Beheizungskammer 11 austreten können. Die Längsachse des Drehrohrofens verläuft gegenüber der Horizontalen leicht geneigt, zweckmäßigerweise mit einem Winkel von 1° bis 5°, vorzugsweise 2,5°.

Das Eingangsende 14 des Drehrohres 10 ist mit einer kreisringförmigen Platte 15 verschlossen in die ein Rohrstutzen 16 eingesetzt ist, welcher lose das Eingaberohr 7 umgibt und an seinem Ende über ein gasdichtes Lager 17 drehbar um die Längsachse L–L auf dem Eingaberohr 7 gehalten ist. Das freie Ende 8 des Eingaberohres 7 ragt ein Stück über das Eingangsende 14 in das Innere des Drehrohres 10 hinein, um zu verhindern, daß sich der Müll in den Ecken zwischen der Ringplatte 15 und dem Drehrohr 10 ansetzt. Das Drehrohr 10 kann in seinem Inneren mit Einbauten versehen sein, welche eine Durchmischung des Mülls bzw. etwaiger Zuschlagsstoffe bewirken. Mit seinem dem freien Ende 16 gegenüberliegenden Ende 18 führt das Drehrohr 10 frei in die Austragsvorrichtung 3 hinein. An den Enden 14 und 18 des Drehrohres 10, jeweils außerhalb der Beheizungskammer 11 und der Austragsvorrichtung 3, sind auf der Außenfläche des Drehrohres 10 Laufringe 19, 20 angebracht über welche sich das Drehrohr 10 auf Rollen abstützt, welche durch die Bezugszeichen 21 und 22 angedeutet sind. Zwischen dem Laufring 19 und der Seitenwandung der Beheizungskammer 11 trägt die Außenfläche des Drehrohres 10 einen Zahnkranz 23 der über ein damit kämmendes Ritzel 24 und einen nicht näher dargestellten Antriebsmotor eine Drehung des Drehrohres 10, wie durch den Pfeil D angedeutet, bewirkt.

Die Austragsvorrichtung 3 besteht aus einer Kammer 25 in welche das freie Ende 18 des Drehrohres 10 seitlich hineinreicht. Die Kammer 25, in welche, wie durch das Bezugszeichen 26 angedeutet, eine Absaugöffnung für die bei der Pyrolyse des Mülls im Drehrohr entstehenden Schwelgase mündet, besteht aus einer Innenwandung 26 welche ein auf dem freien Ende 18 des Drehrohres 10 befestigtes und mit diesem drehbares Stangensieb 27 lose einschließt, wobei der minimale Abstand zwischen einer von den freien Enden des Stangensiebs 27 gebildeten Abwurfkante 28 zu dem dieser gegenüberliegenden Wandungsbereich 29, der in der Zeichnung durch den Buchstaben c angedeutet ist, größer ist als die kleinste Querschnittsdimension im Beschickungsbereich 2. Dies bedeutet, daß jeder durch den Beschickungsbereich 2 in das Drehrohr 10 einbringbare Gegenstand am Ende des Stangensiebes 27 frei in die Kammer 25 austreten kann, ohne sich zwischen dem Stangensieb 27 und dem Wandungsbereich 29 zu verklemmen. Die Innenwandung 26 bildet mittels einer Dichtung 30 einen gasdichten Abschluß gegenüber einem außen auf das freie Ende 18 des Drehrohres 10 befestigten Ringflansch 31. Unterhalb des Stangensiebes 27 begrenzt die Innenwandung 26 einen sich trichterförmig verjüngenden Trockenaustrag 32 für den in dem Drehrohr 10 gebildeten Schwelkoks 33, der sich in dem trichterförmigen Bereich 34 ansammelt und vom unteren Ende desselben mittels einer Austragseinrichtung, beispielsweise mittels einer Austragsschnecke 35, abgezogen wird. Der Trockenaustrag 32 weist eine Ausbildung auf, wie sie in der DE-A-3 018 572 beschrieben ist, auf die hiermit Bezug genommen wird. Die permanente Füllhöhe des Trockenaustrags 32 mit Schwelkoks ist dabei derart gewählt, daß der Schwelkoks einen gasdichten Stöpsel bildet, wobei im oberen Bereich des Schwelkokses die Temperatur so hoch gehalten wird, daß dort die Schwelgase nicht kondensieren können – im allgemeinen über 250 °C – und zwar über eine Schichtdicke über die keine Diffusion mehr stattfindet. Jenseits der Abwurfkante 28 des Stangensiebes 27 begrenzt die Innenwandung 26 die Zuführung zu einer Naßaustragseinrichtung 36. Die unteren Enden 37 der Innenwandung 26 führen dabei bis unter die Oberfläche 38 einer in einem Behälter 39 befindlichen Wasch- und Kühlflüssigkeit 40. Den Behälter 39 durchläuft eine Fördereinrichtung, die in Fig. 1 schematisch als Förderband 41 angedeutet ist, welches über eine Walze 42 unter der von den unteren Enden der Innenwandung 37 gebildeten Austrittsöffnung der Kammer 25 vorbeiführt und dazu dient, grobe Feststoffe, wie sie durch das Bezugszeichen F angedeutet sind, nach deren Abkühlung durch die Wasch- und Kühlflüssigkeit 40 und einer damit einhergehenden Reinigung zur Deponierung abzuführen. Die Innenwandung 26 ist mit Ausnahme des unteren Teils des trichterförmigen Bereiches 34 und der unteren Enden 37 der Innenwandung, welche in den Behälter 39 einmünden, von einem Heizmantel 43 umgeben, der an seiner Außenseite eine Isolierung 44 trägt. Zwischen der Innenwandung 26 und dem Heizmantel 43 ist ein Hohlraum 45 ausgebildet in welchem am unteren Ende ein Einlaßstutzen 46 und am oberen Ende ein Ausgangsstutzen 47 mündet, durch welche ein Heizmedium in den Hohlraum 45 und aus diesem gelangt. Als Heizmedium kann zweckmäßigerweise das durch die Austrittsöffnung 13 aus dem Beheizungskörper 11 austretende Abgas A verwendet werden, das – wie durch den Pfeil A1 angedeutet – über den Einlaßstutzen 46 in den Hohlraum 45 gelangt und dort seine Restwärme über die Innenwandung 26 zur Beheizung der Kammer 25 sowie des oberen Bereichs des Trockenaustrags 32 und der Naßaustragseinrichtung 36 abgibt, bevor es weiter abgekühlt, wie durch den Pfeil A2 angedeutet, aus dem Auslaßstutzen 47 und gegebenenfalls über einen nicht näher dargestellten Kamin ins Freie austritt.

Unterhalb des Stangensiebes 27 ist ein ebener Stangenrost 48 angeordnet, so daß er den Trockenaustrag 32 abdeckt und mit einem Gefälle in Richtung auf den Eingang zur Naßaustragseinrichtung 36 verläuft. Während die Stäbe des Stangensiebs 27 im wesentlichen parallel zur Längsachse L–L des Drehrohres verlaufen, auf die genaue Konstruktion wird im folgenden noch näher eingegangen, sind die Stangen 49 des Stangenrostes 48 im wesentlichen senkrecht hierzu angeordnet, d.h. sie liegen in Ebenen die parallel zur Stirnfläche des Drehrohres 10 verlaufen bzw. die mit der Abwurfkante 28 fluchten. Der Stangenrost 48 ist über Exzenterrollen 50 und 51 derart gelagert, daß er, wie durch den Pfeil R angedeutet, von einem Motor 52 über ein nicht näher dargestelltes Betätigungsglied 53 in eine hin- und hergehende Bewegung versetzt werden kann, bei der aufgrund der Exzenterwirkung der Exzenterrollen 50 und 51 und der Schräglage des Stangenrostes 48 eine Abwurfbewegung in Richtung auf die Naßaustragseinrichtung 36 vorgenommen wird.

Bei dem Betrieb der vorstehend beschriebenen Anlage wird ein vorzugsweise vorzerkleinerter Müll M über den Eingabetrichter 4 und den Einfüllstutzen 6 in das Eingaberohr 7 gebracht und mittels des Schiebers 9, wie durch den Pfeil M1 angedeutet, in das Innere des Drehrohres 10 eingeführt, welches durch die Brenner 12 indirekt beheizt und über den Zahnkranz 23 und das Ritzel 24 in Umdrehung gesetzt ist. Aufgrund der Schräglage des Drehrohres 10 und der andauernden Drehbewegung desselben wandert der Müll wie durch den Pfeil M2 angedeutet kontinuierlich von dem Eingangsende 14 des Drehrohres 10 bis zu dessen Ausgangsende 18, wobei er während dieses Fortschreitens pyrolytisch zersetzt wird. Dies geht mit einer Volumenverminderung einher, was durch Abnahme des Füllkegels auf der Unterseite des Drehrohres 10 angedeutet ist. Die bei der Pyrolyse auftretenden chemischen Vorgänge und deren Beeinflussung durch spezielle Temperaturniveaus, Einbauten und Zusätze, sowie die Einbindung etwaiger Schadstoffe, welche nicht Gegenstand dieser Anmeldung sind, können hierbei in beliebiger Weise vorgenommen werden. Die aus dem freien Ende 18 des Drehrohres 10 austretenden festen Rückstände bestehen aus relativ kleinvolumigen und leichten Schwelkoksteilchen, welche wie durch die Pfeile K angedeutet zwischen den Stäben des Stangensiebs 27 und zwischen den Stangen 49 des Stangenrosts 48 hindurch in den Trockenaustrag 32 fallen. Grobe Feststoffe F, wie Metallteile, Steine, Dosen und dergleichen werden von dem Stangensieb 27 zurückgehalten und wandern längs dessen Stäben nach außen, um letztlich über die Abwurfkante 28 zu der Naßaustragseinrichtung 36 zu fallen. Durch die spezielle im folgenden noch näher beschriebene Ausgestaltung des Stangensiebs 27 wird erreicht, daß sich die groben Feststoffe F nach ihrem Austritt aus dem Drehrohr 10 nicht verklemmen und den Betrieb der Anlage nicht stören bzw. unterbrechen können.

Da die groben Feststoffe auch längliche Teile enthalten können, die aufgrund des Durchlaufens durch das Drehrohr 10 im wesentlichen mit dessen Längsachse L–L fluchten, in das Stangensieb 27 geraten und aufgrund dieser Ausrichtung zwischen den einzelnen Stäben desselben zusammen mit dem Schwelkoks in Richtung auf den Trockenaustrag 32 unter Umständen durchfallen könnten, ist unter dem Stangensieb 27 der Stangenrost 48 mit seinen hierzu senkrecht verlaufenden Stäben 49 vorgesehen, welcher die länglichen Feststoffteile L, wie Bleche, Drähte usw. bedingt durch die Rüttelwirkung und das Gefälle an dem Stangenrost 48 zu dem Eingang der Naßaustragseinrichtung 36 befördern.

Auf diese Weise wird erreicht, daß der Schwelkoks von den im Rückstand enthaltenen Feststoffen wie Dosen, Metall, Steinen und auch Draht im heißen Zustand getrennt ist. Da die groben Feststoffe in der Regel einen höheren Wärmewert haben als der Schwelkoks, muß bei der Kühlung desselben weniger Wärme abgeführt werden, wenn derartige Feststoffe vorher abgetrennt sind. Ein weiterer Vorteil besteht darin, daß der Schwelkoks bei der Kühlung durch die Feststoffe nicht weiter zerkleinert wird, wodurch sich die im Rückstand verbleibenden feinen Inertpartikel wie Glas, Steine und Sand leichter entfernen lassen. Der Hauptvorteil besteht jedoch darin, daß in dem Müll enthaltende Brat nicht in den Trockenaustrag kommt, so daß in diesem ein Schneckenförderer zum Einsatz kommen kann. Die spezielle Ausgestaltung des Stangensiebs 27 verhindert des weiteren, daß sich derartige Drähte in der Siebanordnung verhaken und festklemmen und im Laufe der Zeit die Austragsvorrichtung völlig verstopfen. Die bei dem Pyrolysevorgang entstehenden Schwelgase werden wie durch den Pfeil S angedeutet über dem Auslaß 26 abgezogen, wobei durch die Beheizung der Kammer 25 eine Abkühlung derselben unter ihren Taupunkt verhindert ist.

Im folgenden wird näher auf die Ausgestaltung des Stangensiebs 27 und dessen Halterung eingegangen.

Das Stangensieb 27 besteht aus einer Vielzahl von Stäben 54, die identisch ausgebildet sind. Die Stäbe 54 sind mit ihrem der Stirnfläche 55 des Drehrohres 10 zugekehrten Enden an einer Halterung 57 derart befestigt, daß sie von einander äquidistante Abstände aufweisen. Die Stäbe 54 sind geradlinig und erstrecken sich frei von der Halterung 57 bis zu ihren freien Enden 58, wobei zwischen den Stäben 54 Längsschlitze 59 entstehen, die jeweils von zwei benachbarten Stäben begrenzt sind. Bei dieser Anordnung ist es besonders wichtig, daß die Längsschlitze 59 von der Stirnfläche 55 des Drehrohres 10 bis zu dem freien Ende 58 der Stäbe 54 ununterbrochen durchlaufen und sich über die gesamte Länge nicht verengen. Besonders dann, wenn im dem Drehrohrofen 1 zugeführten Müll M eine große Menge sperriger Feststoffe F regelmäßig anfällt, kann es von Vorteil sein, die Stäbe 54 so auszubilden und anzuordnen, daß sich die Längsschlitze 59 in Richtung auf die Abwurfkante 28, d.h. die Enden der Stäbe geringfügig aufweiten, um sicher zu stellen, daß Feststoffe F, welche sich im inneren Bereich des Stangensiebs 27 zwischen zwei benachbarte Stäbe verklemmt haben, sicher bis zur Abwurfkante 28 ausgeschoben werden. Diese Aufweitung muß jedoch so gering gehalten werden, daß sich die «Maschenweite» des Stangensiebs 27 über die Länge des Stangenrosts nicht merkbar ändert.

Bei dem in den Fig. 1 und 2 dargestellten besonders einfachen Ausführungsbeispiel für das Stangensieb 27 besteht die Halterung 57 aus zwei Bandeisen 61 und 62, welche in einem Abstand voneinander, der gleich oder etwas größer ist als die Breite derselben, mit den Stäben 54 in an deren Außenkanten vorgesehenen, entsprechenden Ausnehmungen 63 und 64 derart verschweißt sind, daß die Außenflächen der Bandeisen 61 und 62 mit den Außenflächen 65 der Stäbe 54 fluchten. Die Bandeisen 61 und 62 enthalten Durchgangsbohrungen 66 und 67 im Bereich zwischen den Stäben 54, so daß sie, wie in Fig. 2 dargestellt, mittels Schraubenbolzen 68 und 69, welche durch in die Außenwandung des Drehrohres 10 eingebrachte radial verlaufende Durchgangsbohrungen 71 und 72 hindurchgesteckt sind, und Muttern 73 und 74 an die Innenwandung 75 des Drehrohres 10 benachbart zu dessen freien Enden 18, gegebenenfalls unter Verwendung von Beilagscheiben festschraubbar sind.

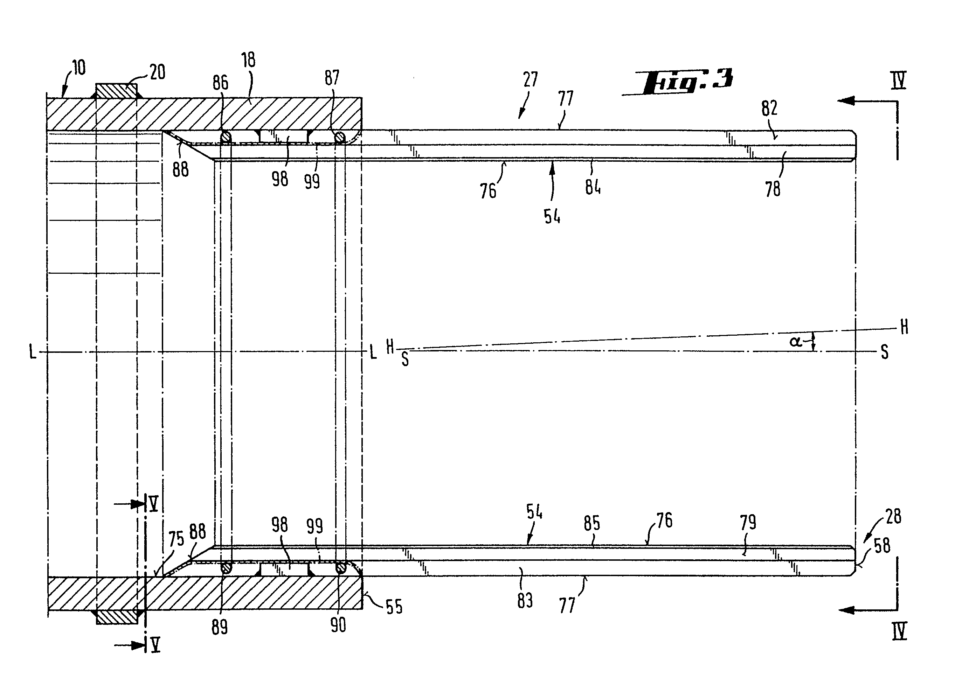

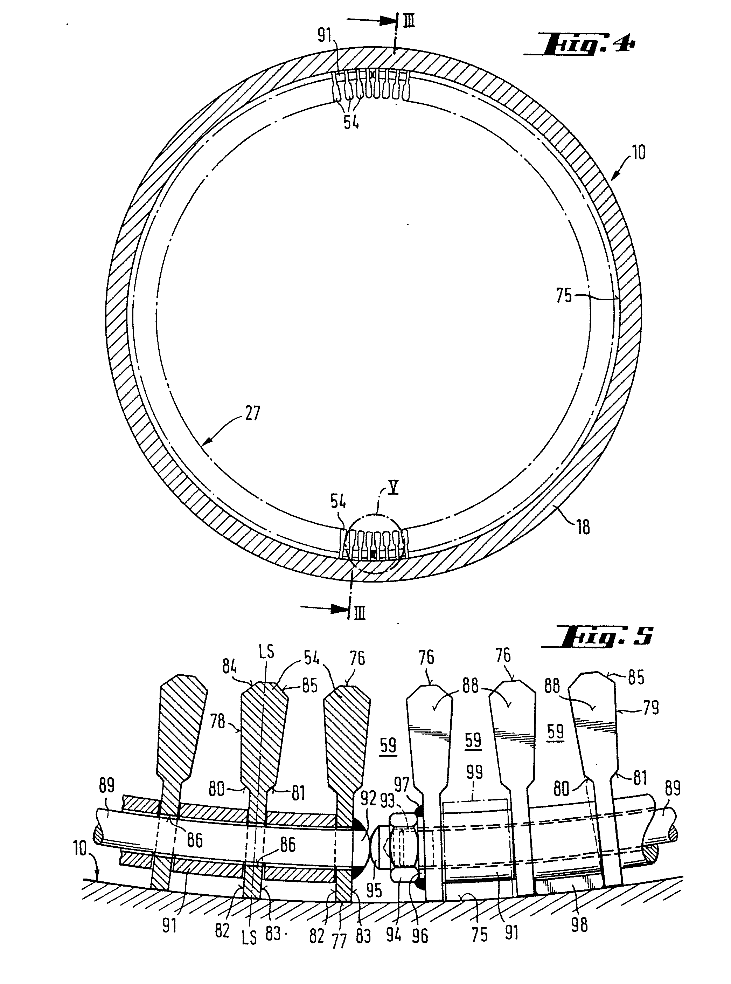

Die Fig. 3 bis 6 zeigen eine Variante des in den Fig. 1 und 2 dargestellten Stangensiebs 27, bei der dieses ebenfalls an der Innenfläche 75 des Drehrohres 10 im Bereich von dessen freien Ende 18 befestigbar ist.

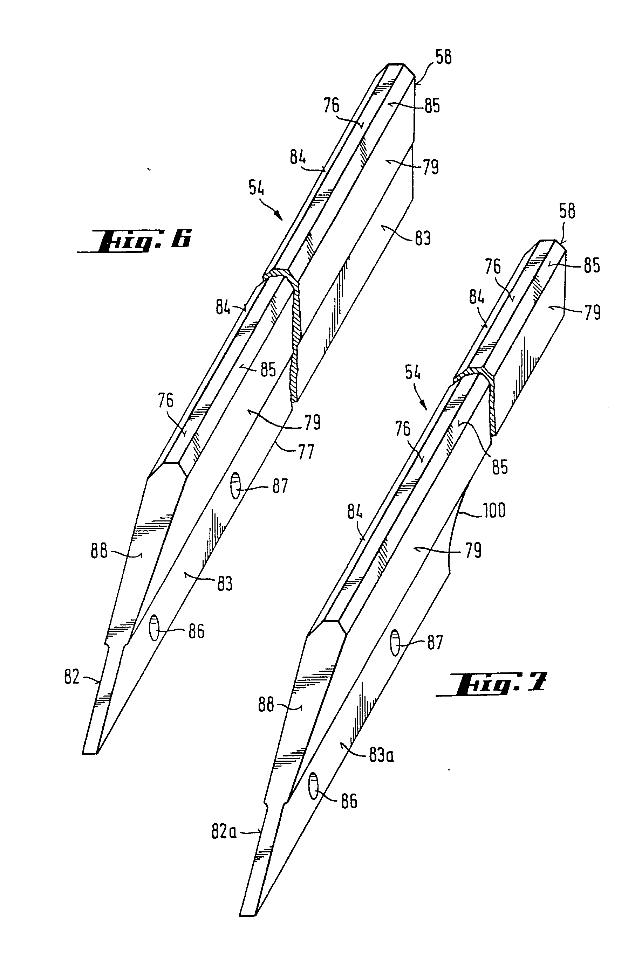

Die Stäbe 54 dieses Stangensiebs haben eine Querschnittsgestalt wie sie am besten aus Fig. 5 ersichtlich ist. Ihre Oberseite, an welcher die Beschickung des Stangenrosts mit den aus dem Drehrohr 10 austretenden entgasten Abfallstoffen erfolgt, und die daher auch als die Beschickungsseite bezeichnet wird, enthält einen geradlinigen Mittelbereich 76. Ein parallel dazu verlaufender auf der Abgabeseite des Stangenrosts gelegener Endbereich 77 bildet das entgegengesetzte Ende der Stäbe. Zu einer den Mittelbereich 76 und den Endbereich 77 senkrecht und mittig durchsetzenden Ebene LS–LS sind die Stäbe symmetrisch aufgebaut, d.h. die Ebene LS–LS bildet die Längssymmetrieebene der Stäbe. Die maximale Ausdehnung der Stäbe senkrecht zur Längssymmetrieebene LS–LS ist erheblich kleiner als diejenige in dieser Richtung Seitenflächen 78 bzw. 79 verlaufen dabei von der Oberseite aus keilförmig nach unten zusammen, wobei sie nach einem steiler verlaufenden Halsbereich 80, 81 in zueinander parallele Seitenwandungsteile 82 und 83 übergehen, die etwa gleich lang sind wie der Bereich mit dem keilförmig verlaufenden Seitenflächen 78, 79 und die an ihrem unteren Ende von dem Endbereich 77 begrenzt sind. Seitlich angrenzend an den geradlinigen Mittelbereich 76 sind abgeschrägte Kanten 84 und 85 vorgesehen, die etwa in einem Winkel von 45° zu der Längssymmetrieebene LS–LS verlaufen. Die Neigung der Seitenflächen 78 und 79 ist vorzugsweise derart gewählt, daß, wie bei dem rechtesten Stab von Fig. 5 durch die links von diesen befindliche Strichlierung angedeutet, eine geradlinige Verlängerung der Flächen 78 und 79 nach unten an dem Übergang zwischen dem Endbereich 77 und den zueinander parallelen Seitenwandungsteilen 82 und 83 einmünden würde. Bei einem Drehrohr mit einem Innendurchmesser von etwa einem Meter würde Fig. 5 eine maßstabsgetreue Wiedergabe der «paddelförmig» ausgebildeten Querschnittskonfiguration darstellen. Die Stäbe 54 können, wie in Fig. 6 dargestellt, über ihre gesamte Länge eine identische Querschnittskonfiguration aufweisen. Sie enthalten an ihrem einen Ende zwei in Längsrichtung gegeneinander versetzte Durchgangsbohrungen 86 und 87, welche die parallel zueinander verlaufenden Seitenwandungsteile 82, 83 durchsetzen und senkrecht zur Längssymmetrieebene LS–LS verlaufen.

An den mit den Durchgangsbohrungen 86, 87 versehenen Enden verlaufen die Stäbe 54 von der Beschickungsseite zu der Abgabeseite abgeschrägt, d.h. der geradlinige Mittelbereich 76 endet vor dem unteren Endbereich 77 und es entsteht eine schräg verlaufende Endstirnfläche 88, welche, wie aus Fig. 3 ersichtlich verhindern soll, daß sich der aus der Sicht der Fig. 3 von links kommende entgaste Müll an den Endstirnflächen 88 staut, oder daß Feststoffe dort hängen bleiben bzw. sich verklemmen können.

Die Stäbe 54 sind zu einer kreiszylindrischen stangenkäfigartigen Anordnung zusammengesetzt, welche das Stangensieb 27 bildet, das in das freie Ende 18 des Drehrohres gesteckt und mit diesem drehfest verbunden ist. Hierzu sind die einzelnen Stangen 54 über ihre Bohrungen 86 auf Seelen 89 und 90 aufgesteckt, die aus einem kreiszylindrischen biegeelastischen Material bestehen. Hülsenförmige Abstandshalter 91, deren Länge etwa doppelt so groß ist, wie die maximale Breite der Stäbe 54, sind zwischen je zwei benachbarte Stäbe 54 auf die Seelen 89 und 90 aufgebracht. Die Abstandshalter 91 bewirken, daß die Stäbe 54 äquidistante Abstände voneinander einnehmen und radial mit ihrer Längssymmetrieebene LS–LS zu der Symmetrieachse S–S des Stangensiebs 27 verlaufen. Die zwischen den einzelnen Stäben 54 gebildeten Schlitze erweitern sich daher keilförmig von der Beschickungsseite des Stangensiebs 27 zu dessen Abgabeseite.

Die durch die Seelen 89 und 90 zusammengehaltenen Stäbe 54 werden in dem Inneren des freien Endes 18 des Drehrohres 10 durch Auseinanderspreizen der Enden der Seelen 89 und 90 befestigt, ohne daß hierzu in der Wand des Drehrohres 10 die bei der Ausführungsform von Fig. 2 notwendigen Bohrungen 70, 71 notwendig wären. Zum Zwecke dieses Einspreizens ist das eine Ende der Seelen 89 bzw. 90 mit einem Vorsprung bzw. einem Nietkopf 92 versehen, während das andere Ende ein Außengewinde 93 trägt. Eine Mutter 94 mit einem rückwärtigen kappenartigen und abgerundeten Vorsprung 95 ist längs des Außengewindes 93 verdrehbar gehaltert, wobei sich die Mutter 94 an einer auf das entsprechende freie Ende der Seele 89 bzw. 90 aufgesteckte Platte 96 abstützt. Sobald die Seelen 89 und 90 derart gespreizt sind, daß die Stäbe 54 mit ihren Endbereichen 77 fest an die Innenwandung 75 des Drehrohres 10 gepreßt sind, wird die Mutter 94 in der eingenommenen Lage arretiert, beispielsweise durch Verstemmen oder eine durch das Bezugszeichen 97 angedeutete Verschweißung.

Damit das Stangensieb 27 bei der vorstehend beschriebenen Befestigung im Inneren des Drehrohres 10 nicht verrutschen kann, sind an der Innenwandung 75 des Drehrohres 10 nach innen vorstehende Laschen 98 vorgesehen, welche derart angebracht sind, daß die eine Seele 89 bezüglich der Längsausdehnung des Drehrohres 10 vor und die andere Seele 90 hinter die Laschen zu liegen kommt.

Es können des weiteren zwischen den einzelnen Stäben Abdeckbleche 99 vorgesehen sein, welche mit ihren dem Inneren des Drehrohrs 10 zugekehrten Stirnflächen mit den Endstirnflächen 88 der Stäbe 54 fluchten, die Seelen 89 und 90, die Abstandshalter 91 sowie die Laschen 98 abdecken, und bis maximal zu der Stirnfläche 55 des Drehrohres 10 heranreichen. Ein mögliches Hängenbleiben oder Verklemmen von Feststoffen an der Halterung des Stangensiebs 27 wird hierdurch wirksam vermieden.

Man erkennt desweiteren aus Fig. 3, daß die Symmetrieachse S–S des kreiszylindrischen Stangensiebs 27 mit der Längsachse L–L des Drehrohrofens fluchtet und wie diese mit der Horizontale H–H einen Winkel α einschließt, so daß von dem Austrittsende des Drehrohrofens bis zur Abwurfkante 28 des Stangensiebs 27 ein Gefälle entsteht.

Fig. 7 zeigt ein weiteres Ausführungsbeispiel für Stäbe 54, wie sie bei der in den Fig. 3 bis 5 gezeigten Ausführungsform des Stangensiebes verwendbar sind. Diese Stäbe entsprechen den in Fig. 6 gezeigten Stäben mit der Ausnahme, daß die parallelen Seitenwandungsteile 83a nicht über die gesamte Länge dieser Stäbe verlaufen sondern nach dem Austritt derselben aus dem Drehrohr 10, wie durch das Bezugszeichen 100 angedeutet, enden, so daß die von dort bis zu den freien Enden 58 vorstehenden Bereiche der Stäbe lediglich den im Querschnitt ruderblattartig gestalteten von den Flächen 76, 78, 79, 80, 81, 84, 85 und einer nicht näher bezeichneten Unterfläche begrenzten Bereich aufweisen.

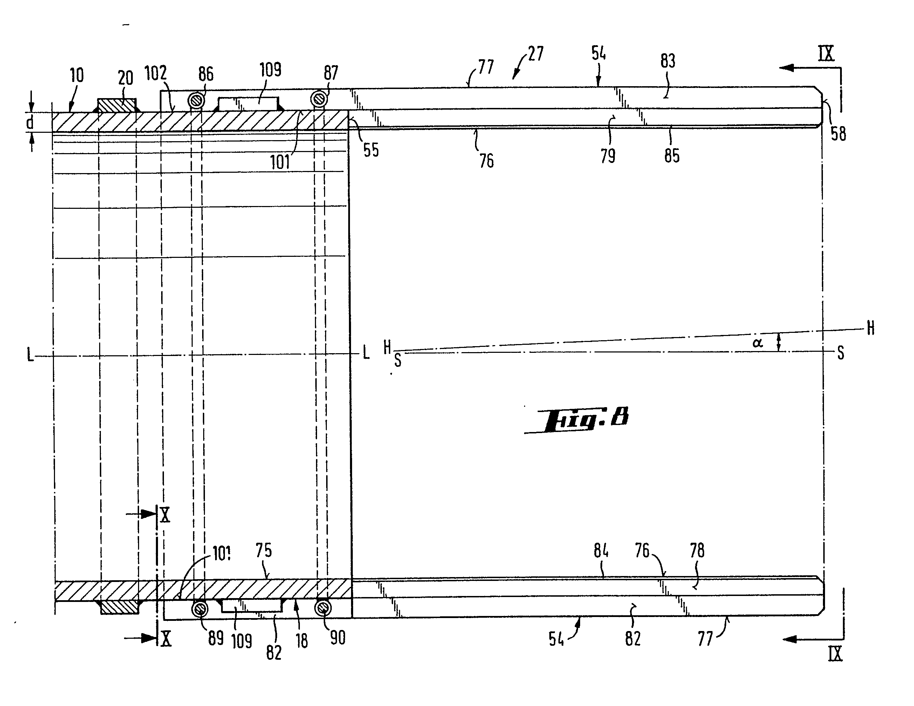

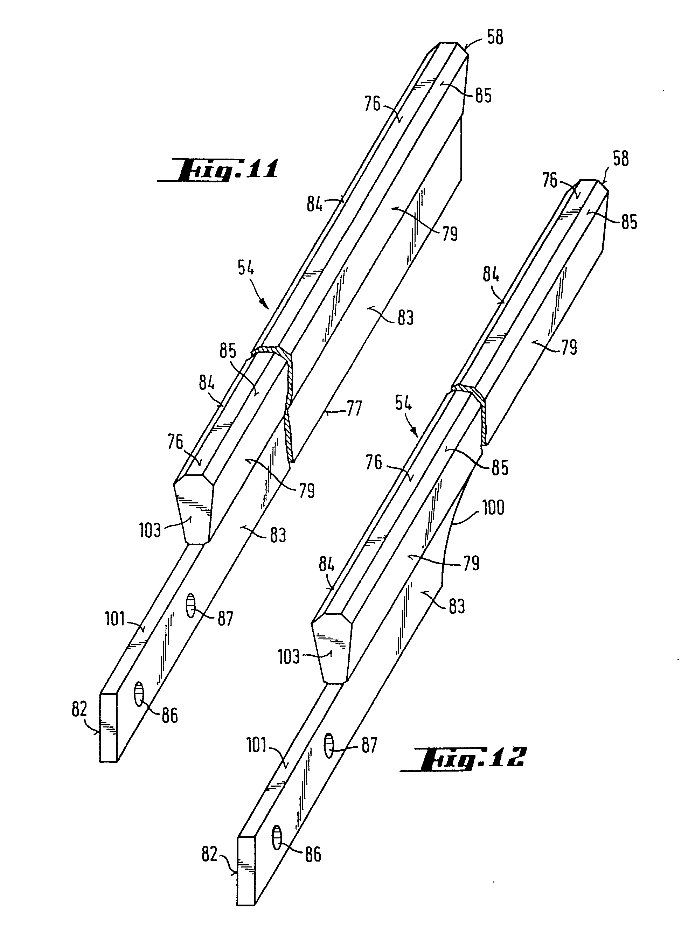

In den Fig. 8 bis 12 ist eine weitere Ausführungsform des Stangensiebs 27 dargestellt, wobei die Ansichten der Fig. 8 bis 12 den Ansichten der Fig. 3 bis 7 entsprechen und gleiche Teile jeweils mit dem gleichen Bezugszeichen belegt sind. Der wesentliche Unterschied der in den Fig. 8 bis 12 gezeigten Ausführungsform besteht darin, daß hier das Stangensieb 27 außen auf das freie Ende 18 des Drehrohres 10 aufgenommen ist, während es bei der Ausführungsform der Fig. 3 bis 7 an entsprechender Stelle jedoch innen in dem Drehrohr 10 eingespannt war. Das Aufspannen des Stangensiebs 27 außen auf das Ende des Drehrohrs 10 bringt den erheblichen Vorteil, daß die Innenwandung 75 des Drehrohres 10 bis an dessen Stirnfläche 55 unbehindert durchläuft, und daß durch geeignete Gestaltung der Stäbe 54, auf die im folgenden noch näher eingegangen wird, erreicht werden kann, daß die geradlinigen Mittelbereiche 76 an der Oberseite der einzelnen Stäbe mit der Innenfläche 75 fluchten. Die Gefahr, daß ein Draht oder ein anderer grober Feststoff an den Übergang von dem Drehrohr 10 zu dem Stangenkäfig 27 hängen bleiben oder sich verklemmen kann, ist daher bei dieser Ausführungsform vollständig vermieden. Die Stäbe 54 sind in dem von der Stirnfläche 55 des Drehrohrs 10 abstehenden und bis zu den freien Enden 58 führenden Bereich identisch zu den Stäben der vorstehend beschriebenen Ausführungsform. Lediglich in dem in Anlage an das Drehrohr 10 und zur Befestigung an diesem dienenden Bereich sind die Stäbe 54 abgewandelt, wobei sie dort aus dem zwischen den beiden parallelen Seitenwandungsteilen 82 und 83 liegenden wandartigen Bereich bestehen, während der «ruderblattartige» Bereich, der von den Flächen 76, 78, 79 sowie 84 und 85 begrenzt wird, dort fehlt. Die Oberfläche der Stäbe wird in diesem Bereich, der die Durchgangsbohrungen 86 und 87 trägt von einer geraden parallel zu dem geradlinigen Mittelbereich 76 verlaufenden Fläche 101 gebildet, die bei außen auf das Drehrohr 10 aufgespanntem Stangensieb 27 an die Außenwandung 102 des Drehrohrs anzuliegen kommt. Der im Querschnitt ruderblattförmige Bereich endet angrenzend an die Fläche 101 in einer Stirnfläche 103 mit der die einzelnen Stangen an die Stirnfläche 55 des Drehrohrs 10 anzuliegen kommen. Die Höhe der Stirnfläche 103, d.h. der in Richtung der Längssymmetrieebene LS–LS gemessene Abstand zwischen der Fläche 101 und dem geradlinigen Mittelbereich 76 an der Oberseite entspricht dabei der Dicke d des Drehrohres 10.

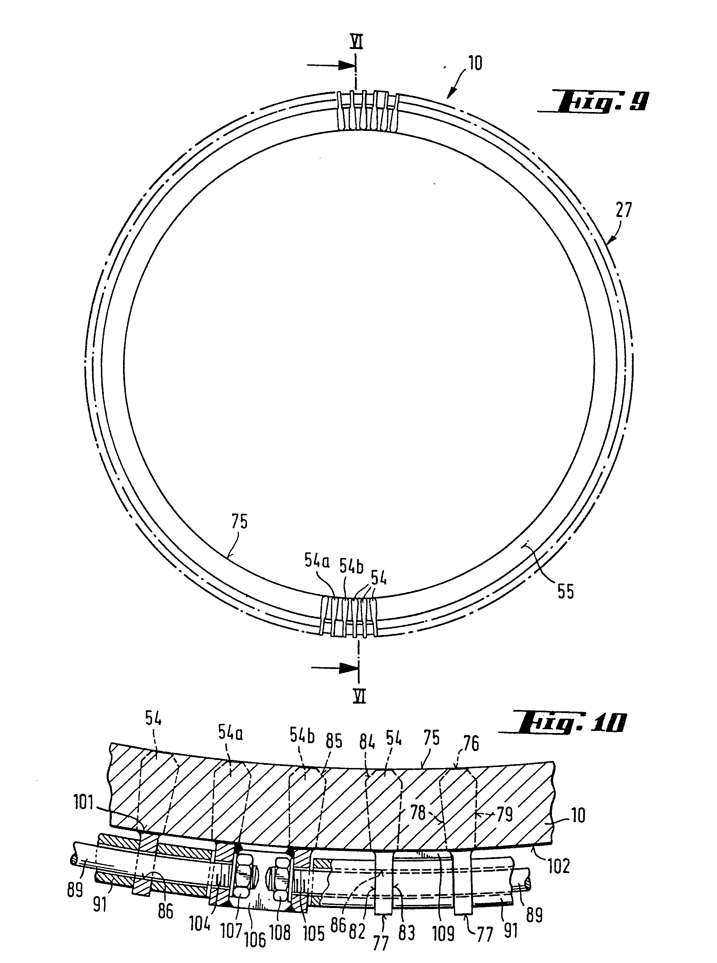

Das Aufspannen der Stäbe 54 erfolgt wie bei dem vorstehend beschriebenen Ausführungsbeispiel über durch ihre Bohrungen 86 hindurchgeführte Seelen 89 und 90 und zwischen diesen auf die Seelen 89 und 90 aufgeschobene hülsenförmige Abstandshalter 91, wobei lediglich die Verbindung der freien Enden der Seelen 89 und 90 in einer abgewandelten Form erfolgt. Die beiden Enden der Seelen 89 und 90 sind hierzu mit je einem Außengewinde 104 bzw. 105 versehen, welches jeweils durch den letzten Stab am jeweiligen Ende hindurchreicht. Diese beiden letzten Stäbe, welche in Fig. 10 mit 54a und 54b bezeichnet sind, werden im gewünschten Abstand voneinander von einem Verbindungsstück 106 gehalten, das mit beiden Stäben 54a bzw. 54b starr verbunden, vorzugsweise verschweißt ist. Durch ein Aufschrauben von Muttern 107 bzw. 108 auf die freien Enden der Außengewinde 104 bzw. 105, wobei gegebenenfalls Beilagscheiben unterlegt werden, lassen sich die Seelen 89 und 90 spannen bis die Flächen 101 stramm an der Außenwandung 102 anliegen. Laschen 109, welche an der Außenwandung 102 derart befestigt sind, daß sie zwischen die Seelen 89 und 90 zu liegen kommen, verhindern ein Verdrehen des Stangensiebs 27 auf dem Drehrohr 10.

Sämtliche im Inneren der Kammer 25 gelegenen Teile, insbesondere das Stangensieb 27 bestehen aus hochfesten, säurebeständigen Materialien, die weder von den Abfallstoffen, noch von den gasförmigen oder festen Pyrolyseprodukten angegriffen werden, und die notwendige Festigkeit aufweisen.

## Patentansprüche

1. Austragsvorrichtung für einen Drehrohrofen, insbesondere zur Pyrolyse von Müll, wobei am Austrittsende (18) des Drehrohres (10) ein Sieb (27) angebracht ist, durch das der feste Rückstand in zwei unterschiedlich feine Fraktionen unterteilt wird, dadurch gekennzeichnet, daß das Sieb als Stangensieb (27) ausgebildet ist, dessen Stäbe (54) derart gehaltert sind, daß ihre jeweils von der Stirnfläche (55) des Drehrohres (10) wegweisenden Enden (58) frei abstehen, wobei von der Austrittsebene des Drehrohres (10) bis zu den frei abstehenden Enden zwischen benachbarten Stäben (54) durchgehende Schlitze (59) vorhanden sind.

2. Austragsvorrichtung nach Anspruch 1 oder 2, dadurch gekennzeichnet, daß der Abstand (a) zwischen den Stäben (54) derart gewählt ist, daß der entstehende Schwelkoks (K) zwischen den Stäben (54) durchfällt und grobe Feststoffe (F) wie Dosen, Metallteile und Steine zurückgehalten werden.

3. Austragsvorrichtung nach einem der vorstehenden Ansprüche, dadurch gekennzeichnet, daß die Längsachsen der Stäbe (54) in Ebenen verlaufen, welche parallel zur Längsachse (L–L) des Drehrohres (10) sind und/oder daß die Längsachsen der Stäbe parallel zueinander verlaufen.

4. Austragsvorrichtung nach einem der vorstehenden Ansprüche, dadurch gekennzeichnet, daß die Stäbe (54) so angeordnet sind, daß sich die durchgehenden Schlitze (59) mit zunehmenden Abstand von der Austrittsebene des Drehrohres (10) leicht aufweiten.

5. Austragsvorrichtung nach einem der vorstehenden Ansprüche, dadurch gekennzeichnet, daß die Oberkante (76) des von dem Drehrohr (10) an dessen Ausgangsende (18) mit festen Rückständen beschickten Bereichs des Stangenrosts (27) mit der angrenzenden Innenfläche (75) des Drehrohres (10) fluchtet.

6. Austragsvorrichtung nach einem der vorstehenden Ansprüche, dadurch gekennzeichnet, daß die Stäbe (54) eine Querschnittsgestalt aufweisen und/oder derart angeordnet sind, daß sich die zwischen je zwei benachbarten Stäben (54) gebildeten Schlitze (59) von der Beschickungsseite des Stangenrostes zu dessen Abgabeseite aufweiten.

7. Austragsvorrichtung nach Anspruch 1, dadurch gekennzeichnet, daß die Stäbe (54) zumindest an ihrem frei abstehenden Bereich einen Kreiszylinder oder einen Kreiskegel festlegen, dessen Symmetrieachse (S–S) vorzugsweise mit der Drehachse (L–L) des Drehrohres (10) fluchtet und daß das Stangensieb (27) quer zur Längsrichtung der Stangen (54) verschiebbar oder vorzugsweise um seine Symmetrieachse (S–S) verschiebbar oder vorzugsweise um seine Symmetrieachse (S–S) drehbar gelagert ist.

8. Austragsvorrichtung nach einem der vorstehenden Ansprüche, dadurch gekennzeichnet, daß die freien Enden (58) der Stäbe (54) von der ihnen gegenüberliegenden Wandung (29) der Austragsvorrichtung einen Abstand (c) einhalten, der größer ist als die größte Dimension des Beschickungsbereichs (2) für den Drehrohrofen (1).

9. Austragsvorrichtung nach einem der vorstehenden Ansprüche, dadurch gekennzeichnet, daß unterhalb des Stangensiebs (27) ein Stangenrost (48) vorgesehen ist, dessen Stangen (49) im wesentlichen senkrecht zu den Stäben (54) des Stangensiebes (27) verlaufen.

10. Austragsvorrichtung nach Anspruch 9, dadurch gekennzeichnet, daß der Stangenrost (48) im wesentlichen eben und von den unter dem Ende des Drehrohres (10) liegenden Bereich in Richtung auf die freien Enden der Stangen (54) des Stangensiebs (27) nach abwärts geneigt verläuft und daß der Stangenabstand (b) in dem Stangenrost (48) größer ist als der Abstand (a) der Stäbe (54) in dem Stangensieb (27).

11. Austragsvorrichtung nach Anspruch 9 oder 10, dadurch gekennzeichnet, daß der Stangenrost (48) mit einer Einrichtung (50 bis 53) versehen ist, welche ihn senkrecht zur Richtung seiner Stangen (49) in eine hin- und hergehende Bewegung versetzt und daß unter dem Stangensieb (27) bzw. dem Stangenrost (48) eine Sammel- und Austragsvorrichtung (32) für den Schwelkoks (K) angebracht ist.

12. Austragsvorrichtung nach einem der vorstehenden Ansprüche, dadurch gekennzeichnet, daß das Stangensieb (27) drehfest mit dem Drehrohr (10) verbunden ist.

13. Austragsvorrichtung nach einem der vorstehenden Ansprüche, dadurch gekennzeichnet, daß die Stäbe (54) in ihren der Abgabeseite zugekehrten Bereichen zumindest je eine Durchgangsbohrung (86, 87) enthalten, durch welche je eine Seele (89, 90) hindurchführbar ist, mittels derer das Stangensieb (25) außen oder innen auf das Drehrohr (10) aufspannbar ist.

14. Austragsvorrichtung nach Anspruch 13, dadurch gekennzeichnet, daß die Seele (89, 90) an einem Ende mit einem Vorsprung (92) versehen ist, der nicht durch die Bohrungen (86, 87) hindurchgeht, und an dem anderen Ende ein Gewinde (93) trägt, auf das ein Schraubglied (94) aufschraubbar ist, das sich mit seinem festen Ende (95) an dem Vorsprung (92) abstützt.

15. Austragsvorrichtung nach einem der vorstehenden Ansprüche, dadurch gekennzeichnet, daß sie als thermisch isolierte abgedichtete Kammer (25) ausgebildet ist, in welche das freie Ende (18) des Drehrohres (10) hineinragt, wobei die Kammer (25) in ihrem unteren Bereich einen Trockenaustrag (32) für den Schwelkoks (K) und eine Naßaustragseinrichtung (36) für die groben Feststoffe (F) enthält.

**Claims**

1. Discharging device for a rotary drum furnace, particularly for the pyrolysis of refuse, in which a screen (27) by means of which the solid residue is divided into two fractions with differing degrees of fineness is fixed at the outlet end (18) of the rotary drum (10), characterised in that the screen is constructed as a bar screen (27) the bars (54) of which are held in such a way that in each case their ends (58) facing away from the end face (55) of the rotary drum (10) stand out freely, and slots (59) extend from the outlet plane of the rotary drum (10) to the free ends between adjacent bars (54).

2. Discharging device as claime in claim 1, characterised in that the distance (a) between the bars (54) is chosen in such a way that the low-temperature coke (K) which is produced falls through between the bars (54) and large solid items (F) such as cans, metal parts and stones are held back.

3. Discharging device as claimed in one of the preceding claims, characterised in that the longitudinal axes of the bars (54) extend in planes which are parallel to the longitudinal axis (L–L) of the rotary drum (10) and/or the longitudinal axes of the bars run parallel to one another.

4. Discharging device as claimed in one of the preceding claims, characterised in that the bars (54) are arranged in such a way that the slots (59) widen slightly as their distance from the outlet plane of the rotary drum (10) increases.

5. Discharging device as claimed in one of the preceding claims, characterised in that the upper edge (76) of the region of the bar grate (27) which is charged with solid residues from the rotary drum (10) at the discharge end (18) of the latter is aligned with the adjoining inner face (75) of the rotary drum (10).

6. Discharging device as claimed in one of the preceding claims, characterised in that the bars (54) have a cross-sectional construction and/or are arranged in such a way that the slots formed between each pair of adjacent bars (54) widen from the charging side of the bar grate to the discharge side thereof.

7. Discharging device as claimed in claim 1, characterised in that at least at the region where they stand out freely the bars (54) define a circular cylinder or a circular cone the axis of symmetry (S–S) of which is preferably aligned with the axis of rotation (L–L) of the rotary drum (10) and the bar screen (27) is movable at right angles to the longitudinal direction of the bars (54) or preferably mounted so as to be rotatable about its axis of symmetry (S–S).

8. Discharging device as claimed in one of the preceding claims, characterised in that the free ends (58) of the bars (54) are spaced from the wall (29) of the discharging device which lies opposite them by a distance which is greater than the greatest dimension of the charging region (2) for the rotary drum furnace (1).

9. Discharging device as claimed in one of the preceding claims, characterised in that a bar grate (48) in which the bars (49) extend substantially at right angles to the bars (54) of the bar screen (27) is provided below the bar screen (27).

10. Discharging device as claimed in claim 9, characterised in that the bar grate (48) is substantially flat and extends at an angle downwards from the region lying below the end of the rotary drum (10) in the direction of the free ends of the bars (54) of the bar screen (27), and the distance (b) between the bars in the bar grate (48) is greater than the distance (a) between the bars in the bar screen (27).

11. Discharging device as claimed in claims 9 or 10, characterised in that the bar grate (48) is provided with an arrangement (50 to 53) which sets it in a to-and-fro motion at right angles to the direction of the bars (49) thereof, and a collecting and discharging arrangement (32) for the low-temperature coke (K) is fixed below the bar screen (27) and the bar grate (48).

12. Discharging device as claimed in one of the preceding claims, characterised in that the bar screen (27) is connected to the rotary drum (10) so as to be fixed against rotation.

13. Discharging device as claimed in one of the preceding claims, characterised in that the bars (54) each contain in their regions facing the discharge side at least one through bore (86, 87) through which in each case a stem (89, 90) can be passed by means of which the bar screen (25) can be fixed externally or internally onto the rotary drum (10).

14. Discharging device as claimed in claim 13, characterised in that the stem (89, 90) is provided at one end with a projection which does not pass through the bores and at the other end has a thread (93) onto which a screw member (94) which is supported with its free end (95) on the projection (92) can be screwed.

15. Discharging device as claimed in one of the preceding claims, characterised in that it is constructed as a heat-insulated sealed chamber (25) into which the free end (18) of the rotary drum (10) projects, and in its lower region the chamber (25) contains a dry discharge (32) for the low-temperature coke (K) and a wet discharge arrangement (36) for the large solid items (F).

**Revendications**

1. Dispositif de déchargement pour four à tambour rotatif ou dispositif de décharge de four tubulaire rotatif destiné en particulier à la pyrolyse d'ordures ménagères, un crible (27) monté à l'extrémité de sortie (18) du tube tournant (10) étant destiné à diviser le refus solide en deux fractions de finesses différentes, caractérisé en ce que le crible (27) est à barreaux (54) fixés de manière que leur extrémité (58) se prolongeant au-delà de la surface extrême (55) du tube tournant (10) soit librement en porte à faux, des fentes ou interstices continus (59) subsistant entre les barreaux voisins (54) entre le plan de sortie du tube tournant (10) et le bout de l'extrémité en porte à faux de ces barreaux.

2. Dispositif de décharge selon la revendication 1, caractérisé en ce que la distance (a) adoptée qui sépare les barreaux (54) est telle que le semi-coke produit (K) tombe entre les barreaux (54) et que les solides en grosses particules (F), tels que les boîtes de conserve, les pièces métalliques et les pierres, soient retenus.

3. Dispositif de décharge selon l'une des revendications 1 et 2, caractérisé en ce que l'axe longitudinal des barreaux (54) passe par un plan qui est parallèle à l'axe longitudinal (L–L) du tube tournant (10) et/ou en ce que les axes longitudinaux des barreaux soient parallèles.

4. Dispositif de décharge selon l'une quelconque des revendications précédentes, caractérisé en ce que les barreaux (54) sont disposés de manière que les fentes ou interstices continus (59) s'élargissent légèrement avec l'accroissement de la distance au plan de sortie du tube tournant (10).

5. Dispositif de décharge selon l'une quelconque des revendications précédentes, caractérisé en ce que le bord supérieur (76) de la partie du crible (27) sur laquelle parviennent les rebuts solides provenant de l'extrémité de sortie (18) du tube tournant (10) est à l'alignement de la surface intérieure avoisinante (75) dudit tube tournant (10).

6. Dispositif de décharge selon l'une quelconque des revendications précédentes, caractérisé en ce que les barreaux (54) ont un profil transversal et/ou sont disposés de manière que les fentes ou interstices (59) subsistant entre deux barreaux voisins (54) s'élargissent du côté de l'alimentation vers le côté de déversement du crible.

7. Dispositif de décharge selon la revendication 1, caractérisé en ce qu'au moins la partie des barreaux (54) disposée librement en porte à faux inscrit un cylindre ou un cône de section circulaire, dont l'axe de symétrie (S–S) est de préférence à l'alignement de l'axe de rotation (L–L) du tube tournant (10) et en ce que le crible (27) est translatable perpendiculairement à la direction de la longueur des barreaux (54) ou translatable de préférence autour de son axe de symétrie (S–S) ou avantageusement monté rotatif autour de son axe de symétrie (S–S).

8. Dispositif de décharge selon l'une quelconque des revendications précédentes, caractérisé en ce que l'extrémité libre (58) des barreaux (54) est située, par rapport à la cloison (29) du dispositif de décharge qui est située en face d'elle, à une distance (c) qui est supérieure à la cote maximale de la zone d'alimentation (2) du four tubulaire rotatif (1).

9. Dispositif de décharge selon l'une quelconque des revendications précédentes, caractérisé en ce qu'une grille (48) à barreaux (49) sensiblement perpendiculaires à ceux (54) du crible (27) est prévue au-dessous de ce dernier.

10. Dispositif de décharge selon la revendication 9, caractérisé en ce que la grille à barreaux (48) est sensiblement plane et inclinée vers le bas de sa partie située sous l'extrémité du tube tournant (10) vers l'extrémité libre des barreaux (54) du crible (27) et en ce que la distance (b) séparant les barreaux de la grille (48) est supérieure à celle (a) des barreaux (54) du crible (27).

11. Dispositif de décharge selon l'une des revendications 9 et 10, caractérisé en ce que la grille à barreaux (48) est équipée d'un appareillage (50 à 53) qui l'anime d'un mouvement alternatif perpendiculaire à l'orientation de ses barreaux (49) et en ce qu'un dispositif collecteur et de décharge (32) du semi-coke (K) est disposé sous le crible (27) et sous la grille (48).

12. Dispositif de décharge selon l'une quelconque des revendications précédentes, caractérisé en ce que le crible à barreaux (27) est solidarisé en rotation du tube tournant (10).

13. Dispositif de décharge selon l'une quelconque des revendications précédentes, caractérisé en ce que la partie des barreaux (54) tournée vers le côté de déversement du tube tournant du four comporte au moins un trou (86, 87) qui la traverse de part en part et par lequel il soit possible d'enfiler une âme (89, 90) permettant de fixer par serrage le crible (25) sur l'extérieur ou l'intérieur du tube (10).

14. Dispositif de décharge selon la revendication 13, caractérisé en ce que l'âme (89, 90) comporte à une extrémité un prolongement (92) qui ne passe pas par ledit trou (86, 87) et, à l'autre extrémité, un filetage (93) sur lequel se visse une pièce en forme d'écrou (94) dont l'extrémité libre (95) se met en appui contre ledit prolongement (92).

15. Dispositif de décharge selon l'une quelconque des revendications précédentes, caractérisé en ce qu'il comprend une chambre hermétique (25) équipée d'une isolation thermique et dans laquelle pénètre l'extrémité libre (18) du tube tournant (10), ladite chambre (25) comportant dans la partie basse une décharge à sec (32) du semi-coke (K) et un dispositif de décharge à voie humide (36) destiné aux solides en grosses particules (F).

**Fig.1**

**Fig.2**

EP 0 086 488 B1

Fig.3

*Fig. 4*

*Fig. 5*

_Fig. 6_

_Fig. 7_

Fig. 8

Fig. 9

Fig. 10

*Fig.11*

*Fig.12*